# EUROPÄISCHE PATENTSCHRIFT

(11) **EP 0 473 620 B1**
(45) Veröffentlichungstag und Bekanntmachung des Hinweises auf die Patenterteilung: **10.11.1993**
(21) Anmeldenummer: 90906965.0
(22) Anmeldetag: 04.05.1990
(51) Int. Cl.: C23C 24/10, C23C 26/02, A61F 2/30

(54) **VERFAHREN ZUR HERSTELLUNG EINER VERSCHLEISSFESTEN GLEITFLÄCHE BEI GELENKENDOPROTHESEN**
PROCESS FOR MANUFACTURING A WEAR-RESISTANT SLIDING SURFACE IN JOINT ENDOPROSTHESES
PROCEDE POUR DOTER LES ENDOPROTHESES POUR ARTICULATIONS D'UNE SURFACE DE GLISSEMENT RESISTANT A L'USURE

(30) Priorität: 26.05.1989 DE 3917211
(43) Veröffentlichungstag der Anmeldung: 11.03.1992
(73) Patentinhaber: AESCULAP AG, D-78501 Tuttlingen (DE)
(72) Erfinder: FINK, Ulrich, D-7200 Tuttlingen (DE)
(74) Vertreter: Hoeger, Stellrecht & Partner
(86) Internationale Anmeldenummer: EP9000714
(87) Internationale Veröffentlichungsnummer: WO9014447

(56) Entgegenhaltungen:
- EP-A- 0 246 828
- FR-A- 2 385 810
- FR-A- 2 452 528
- GB-A- 2 201 972
- US-A- 4 212 900
- Patent Abstracts of Japan, Band 11, nr. 251 (C-440) (2698), 14.08.87, & JP-A-6256561 (HONDA MOTOR CO. LTD) 12.03.87
- Patent Abstracts of Japan, Band 6, nr.31 (C-92) (909), 24.02.82, & JP-A-56150183 ( HITACHI SEISAKUSHO K.K.) 20.11.81

## Beschreibung

Die Erfindung betrifft ein Verfahren zur Herstellung einer verschleißfesten Gleitfläche bei Gelenkendoprothesen aus Reintitan oder einer Titanlegierung, bei der man das Titan oder die Titanlegierung der Prothese mittels Laserstrahlung oberflächlich aufschmilzt und gleichzeitig dem aufgeschmolzenen Titan oder der aufgeschmolzenen Titanlegierung mindestens einen Reaktionspartner zufügt und somit eine Legierung des Titans oder der Titanlegierung mit dem mindestens einen Reaktionspartner bildet.

Aufgrund der hervorragenden Körperverträglichkeit von Titan und Titanlegierungen werden diese Werkstoffe häufig für Endoprothesen verwendet. Der Einsatz dieser Materialien ist jedoch durch ihr äußerst ungünstiges Verschleißverhalten begrenzt. Dies gilt insbesondere für den Bereich der tribologisch beanspruchten Gleitflächen in Gelenken.

Es ist üblich, Gleitflächen aus Titan oder Titanlegierungen mit Gleitpartnern aus ultrahochmolekularem Niederdruckpolyethylen zu kombinieren. Dabei entstehen bei beiden Partnern Verschleißpartikel, die bei der Abfuhr aus der Gelenkkapsel Probleme verursachen können. Im Falle des Titans und der Titanlegierungen handelt es sich dabei um schwarze Abriebprodukte.

Es ist daher bekannt, die Titanoberfläche zu härten, um bessere Verschleißeigenschaften zu erhalten. Beispielsweise verwendet man zur Härtung die Verfahren der anodischen oder thermischen Oxidation oder PVD- oder CVD-Verfahren (Physical Vapour Deposition; Chemical Vapour Deposition), mit denen zum Beispiel Titannitrid-Schichten auf das Titan-Grundmaterial aufgebracht werden können. Allerdings erhält man dabei nur eine kurzzeitige Verbesserung des Verschleißverhaltens, da die Schichten nur eine Schichtdicke von 3 bis 5 Mikrometern haben und da das Grundmaterial so weich ist, daß die Schichten bei hoher Flächenpressung durchbrechen.

Mit den genannten Methoden können dickere Schichten nicht aufgebracht werden. Es ist auch bereits bekannt, auf Titan Schichten aus TiO₂, Al₂O₃, ZrO₂ oder Cr₂O₃ durch Plasmaspritzen aufzutragen. Dabei lassen sich dickere Schichten ausbilden. Jedoch setzt das Plasmaspritzverfahren eine außerordentlich aufwendige Apparatur voraus, so daß sich ein sehr teures und kompliziertes Beschichtungsverfahren ergibt.

Aus der EP-A-0 246 828 ist ein Verfahren zur Oberflächenhärtung durch Aufschmelzung der Oberfläche und Legierung des aufgeschmolzenen Oberflächenmaterials mittels eines Reaktionspartners bekannt. Dabei wird im wesentlichen ein Plasmastrahl gegen die zu härtende Oberfläche gerichtet. Es handelt sich dabei um einen Gasstrahl mit sehr hoher Temperatur. Es ist dabei auch erwähnt, daß ein Laserstrahl zum Aufschmelzen eingesetzt werden soll.

Es ist Aufgabe der Erfindung, ein Verfahren zur Herstellung der Gleitfläche bei Gelenkendoprothesen so zu verbessern, daß einerseits eine ausreichend dicke, widerstandsfähige Gleitschicht erzielt werden kann und daß andererseits der Herstellungsaufwand relativ gering bleibt.

Diese Aufgabe wird bei einem Verfahren der eingangs beschriebenen Art erfindungsgemäß dadurch gelöst, daß man die Gleitfläche mittels eines Laserstrahles zeilenweise abrastert, wobei sich benachbarte Zeilen überlappen, und daß während des Aufschmelzvorganges durch Abrastern der Gleitfläche mittels eines Laserstrahles reaktive Gase Zutritt zu reaktiven Schmelzoberfläche haben.

Die Gleitfläche wird also von dem Laserstrahl rasterförmig abgefahren, wobei der Laserstrahl beim Auftreffen einen lokal eng begrenzten Bereich des Titans oder der Titanlegierung aufschmilzt, und zwar mit einer relativ großen Eindringtiefe in der Größenordnung von beispielsweise 0,1 bis 0,7 mm, so daß nach dem Erstarren des Materials in dem lokal aufgeschmolzenen Bereich in diesem eine Legierungsschicht gebildet wird. Das Abrastern der Gleitfläche mittels des Laserstrahles erfolgt so, daß die gesamte Gleitfläche in dieser Weise lokal nacheinander aufgeschmolzen wird, so daß sich auf der gesamten Gleitfläche eine derartige Legierungsbildung einstellt.

Als reaktive Gase können vorzugsweise Verwendung finden Stickstoff, Sauerstoff, Methan, Acethylen, Borane oder Silane, denen gegebenenfalls noch Edelgase beigefügt werden können, beispielsweise Helium oder Argon. Es ergeben sich dabei Legierungen, die neben dem Titan oder der ursprünglichen Titanlegierung Bestandteile des Beschichtungsmaterials und Bestandteile des reaktiven Gases enthalten.

Die Oberflächenschicht wird in der Regel nach der Erstarrung mechanisch nachgearbeitet, wobei durch die Ausbildung einer Legierung die Nachbearbeitung erheblich vereinfacht wird, da die gehärtete Oberflächenschicht nicht wie das Titan-Grundmaterial bei der mechanischen Bearbeitung zum Schmieren neigt.

Zum lokalen Aufschmelzen kann man vorzugsweise einen CO₂-Laser oder einen Nd:YAG-Laser verwenden.

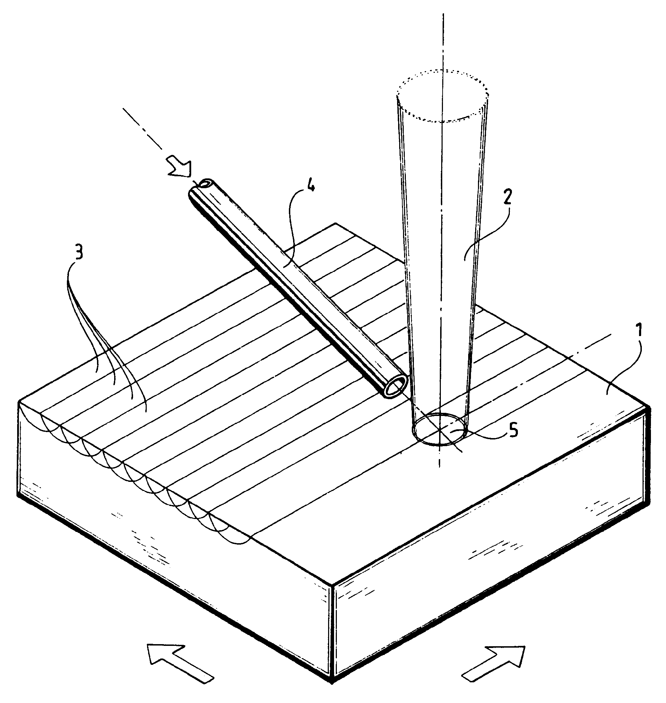

Die nachfolgende Beschreibung dient im Zusammenhang mit der Zeichnung der näheren Erläuterung der Erfindung. Die Zeichnung zeigt schematisch das Abrastern einer Oberfläche mit einem Laser unter gleichzeitiger Zufuhr eines Gases.

In der Zeichnung ist lediglich schematisch ein Substrat 1 dargestellt, das einen Ausschnitt aus der Gleitfläche einer in der Zeichnung nicht näher dargestellten Endoprothese darstellt. Dieses Substrat besteht entweder aus Reintitan oder einer Titanlegierung.

Um die Oberfläche dieses Substrates mit einer gehärteten Oberflächenschicht zu versehen, wird auf das Substrat ein Laserstrahl 2 gerichtet, der zeilenweise über das Substrat bewegt wird, wobei sich benachbarte Zeilen 3 überlappen. Gleichzeitig wird über eine Zufuhrleitung 4, die im Auftreffbereich des Laserstrahles auf das Substrat 1 endet, ein reaktives Gas zugeführt, beispielsweise Stickstoff, Sauerstoff, Methan, Acethylen, Borane oder Silane, denen gegebenenfalls Edelgase zugesetzt sind, beispielsweise Helium oder Argon. Im Auftreffbereich 5 des Laserstrahles 2 wird das Substratmaterial aufgeschmolzen. In das aufgeschmolzene Substratmaterial gelangt durch die Zufuhrleitung 4 reaktives Gas, das sich mit der Schmelze vermischt und somit eine Legierung bildet, die nach der Weiterbewegung des Laserstrahles 2 längs der Substratoberfläche wieder erstarrt.

Auf diese Weise ergibt sich eine flächendeckende Legierung aus dem Substratmaterial einerseits und den zugeführten reaktiven Gasen andererseits.

Es ist möglich, das Verfahren mehrfach zu wiederholen, das heipt die Oberfläche mehrfach mit dem Laserstrahl rasterförmig zu überfahren.

Die nach einem der oben beschriebenen Verfahren erzielte Legierungsschicht auf der Oberfläche des Substrates kann eine Dicke von 0,1 bis 0,7 mm aufweisen. Nach dem Erstarren wird diese Oberflächenschicht mechanisch nachgearbeitet, um die erforderliche geringe Rauhigkeit zu erzielen. Bei der oben genannten Schichtdicke läßt sich dies ohne weiteres durchführen, ohne daß dabei eine zu geringe Schichtdicke auftritt.

Im Rahmen dieser Anmeldung wird Schutz begehrt nicht nur für das Herstellungsverfahren, sondern auch für Endoprothesen, die mittels dieses Verfahrens hergestellte Gleitflächen aufweisen.

## Patentansprüche

1. Verfahren zur Herstellung einer verschleipfesten Gleitfläche bei Gelenkendoprothesen aus Reintitan oder einer Titanlegierung, bei der man das Titan oder die Titanlegierung der Prothese mittels Laserstrahlung oberflächlich aufschmilzt und gleichzeitig dem aufgeschmolzenen Titan oder der aufgeschmolzenen Titanlegierung mindestens einen Reaktionspartner zufügt und somit eine Legierung des Titans oder der Titanlegierung mit dem mindestens einen Reaktionspartner bildet,
**dadurch gekennzeichnet**,
daß man die Gleitfläche mittels eines Laserstrahles zeilenweise abrastert, wobei sich benachbarte Zeilen überlappen, und daß während des Aufschmelzvorganges durch Abrastern der Gleitfläche mittels eines Laserstrahles reaktive Gase Zutritt zur reaktiven Schmelzoberfläche haben.

2. Verfahren nach Anspruch 1, dadurch gekennzeichnet, daß man als reaktive Gase Stickstoff, Sauerstoff, Methan, Acethylen, Borane oder Silane verwendet, denen gegebenenfalls Edelgase zugesetzt sind.

3. Verfahren nach einem der voranstehenden Ansprüche, dadurch gekennzeichnet, daß man die einmal von einem Laser abgerasterte Gleitfläche wiederholt mittels eines Lasers abrastert und dadurch mehrmals aufschmilzt.

4. Verfahren nach einem der voranstehenden Ansprüche, dadurch gekennzeichnet, daß die aufgeschmolzene Oberflächenschicht 0,1 bis 0,7 mm dick ist.

5. Verfahren nach einem der voranstehenden Ansprüche, dadurch gekennzeichnet, daß man die Oberflächenschicht nach der Erstarrung mechanisch nachbearbeitet.

6. Verfahren nach einem der voranstehenden Ansprüche, dadurch gekennzeichnet, daß man zum lokalen Aufschmelzen einen CO₂-Laser oder einen Nd:YAG-Laser verwendet.

## Claims

1. A process for the manufacture of a wear-resistant sliding surface in joint endoprostheses made of pure titanium or a titanium alloy, in which the titanium or the titanium alloy of the prosthesis is superficially melted by means of laser radiation and at the same time at least one reaction partner is added to the molten titanium or to the molten titanium alloy and consequently the titanium or the titanium alloy forms an alloy with the at least one reaction partner, characterised in that the sliding surface is linearly raster scanned by means of a laser beam, adjacent lines overlapping, and in that during the melting operation by raster scanning of the sliding surface by means of a laser beam, reactive gases have access to the reactive molten surface.

2. A process in accordance with Claim 1, characterised in that nitrogen, oxygen, methane, acetylene, boranes or silanes - to which noble gases are optionally added - are used as reactive gases.

3. A process in accordance with any one of the preceding Claims, characterised in that the sliding surface which has been raster scanned by a laser once is repeatedly raster scanned by means of a laser and thereby repeatedly melted.

4. A process in accordance with any one of the preceding Claims, characterised in that the molten surface layer is 0.1 to 0.7 mm thick.

5. A process in accordance with any one of the preceding Claims, characterised in that the surface layer is further processed mechanically after solidification.

6. A process in accordance with any one of the preceding Claims, characterised in that a CO₂ laser or a Nd:YAG laser is used for local melting.

## Revendications

1. Procédé de fabrication d'une surface de glissement résistant à l'usure dans des endoprothèses articulaires en titane ou en un alliage de titane, dans lequel on fait fondre superficiellement le titane ou l'alliage de titane de la prothèse au moyen d'un rayonnement laser, tout en ajoutant au moins un partenaire réactionnel au titane fondu ou à l'alliage de titane fondu et on forme ainsi un alliage du titane ou de l'alliage de titane avec le(s) partenaire(s) réactionnel(s), caractérisé en ce qu'on balaye ligne par ligne la surface de glissement au moyen d'un faisceau laser, les lignes voisines se recouvrant, et en ce que pendant l'opération de fusion par balayage de la surface de glissement au moyen d'un faisceau laser, des gaz réactifs ont accès à la surface fondue réactive.

2. Procédé selon la revendication 1, caractérisé en ce qu'on utilise comme gaz réactifs de l'azote, de l'oxygène, du méthane, de l'acétylène, des boranes ou des silanes, auxquels on ajoute le cas échéant des gaz nobles.

3. Procédé selon une des revendications précédentes, caractérisé en ce qu'on balaye à plusieurs reprises au moyen d'un laser la surface de glissement balayée une fois par un laser et qu'on la fait ainsi fondre à plusieurs reprises.

4. Procédé selon une des revendications précédentes, caractérisé en ce que la couche superficielle fondue a 0,1 à 0,7 mm d'épaisseur.

5. Procédé selon une des revendications précédentes, caractérisé en ce qu'on traite mécaniquement la couche superficielle après sa solidification.

6. Procédé selon une des revendications précédentes, caractérisé en ce qu'on utilise un laser au CO₂ ou un laser Nd:YAG pour la fusion localisée.
